# EUROPEAN PATENT APPLICATION

(11) **EP 4 657 947 A1**
(43) Date of publication of application: **03.12.2025**
(21) Application number: 24756085.7
(22) Date of filing: 05.02.2024
(51) Int. Cl.: H04W 72/0453, H04W 24/10

(54) **MEASUREMENT METHOD AND COMMUNICATION APPARATUS**

(30) Priority: 17.02.2023 CN 202310165232
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); SONG, Xinghua, Shenzhen, Guangdong 518129 (CN)
(74) Representative: Gill Jennings & Every LLP
(86) International application number: PCT/CN2024/075894
(87) International publication number: WO 2024/169711

(57) **Abstract**

This application provides a measurement method and a communication apparatus. The method may be applied to a communication system such as NR, LTE, or V2X. The method includes: A terminal device receives one or more measurement signals, where the one or more measurement signals include a measurement signal 1. The terminal device sends one or more measurement reports to a network device on a physical uplink control channel and/or a physical uplink shared channel, where the one or more measurement reports include a measurement report 1. The measurement report 1 includes information obtained by performing cross-link interference measurement based on the measurement signal 1. A reporting type of the measurement report 1 includes aperiodic reporting or semi-persistent reporting. In this way, the terminal device can report a measurement report about cross-link interference measurement to the network device more flexibly and more quickly, and the network device can obtain variation of cross-link interference between terminal devices more quickly.

## Description

This application claims priority to Chinese Patent Application No. 202310165232.1, filed with the China National Intellectual Property Administration on February 17, 2023 and entitled "MEASUREMENT METHOD AND COMMUNICATION APPARATUS", which is incorporated herein by reference in its entirety.

### TECHNICAL FIELD

This application relates to the field of communication technologies, and more specifically, to a measurement method and a communication apparatus.

### BACKGROUND

In a subband full duplex (subband full duplex, SBFD) solution of a time division duplex (time division duplex, TDD) system, one component carrier includes at least one subband, and transmission directions of subbands on a same symbol may be different. To be specific, transmission directions of some subbands are uplink, and transmission directions of some subbands are downlink. In other words, transmission directions of different subbands in one component carrier may be different. Signal power in a subband may leak to adjacent subbands, and this causes interference between an uplink and a downlink, which is referred to as cross-link interference (cross-link interference, CLI). CLI between terminal devices affects communication quality of the terminal devices. Therefore, the CLI between the terminal devices needs to be measured.

Currently, the terminal device may measure a sounding reference signal (sounding reference signal, SRS) sent by an interfering terminal device, and feed back an SRS measurement result to a network device. However, in this manner, the network device cannot obtain variation of the CLI between the terminal devices more quickly.

### SUMMARY

This application provides a measurement method and a communication apparatus, so that a network device can obtain variation of CLI between terminal devices more quickly.

According to a first aspect, a measurement method is provided. The method includes: A first terminal device receives one or more measurement signals, where the one or more measurement signals include a first measurement signal. The first terminal device sends one or more measurement reports to a network device on at least one of a physical uplink control channel and a physical uplink shared channel, where the one or more measurement reports include a first measurement report, and the first measurement report includes information obtained by performing cross-link interference measurement based on the first measurement signal. A reporting type of the first measurement report includes aperiodic reporting or semi-persistent reporting.

Optionally, the reporting type of the first measurement report may further include periodic reporting or event-triggered reporting.

The terminal device reports the measurement report to the network device on the physical uplink control channel (physical uplink control channel, PUCCH) and/or the physical uplink shared channel (physical uplink shared channel, PUSCH), so that in this application, the terminal device can report the measurement report to the network device more flexibly and more quickly in a level 1 (level 1, L1) manner and/or a level 2 (level 2, L2) manner. In this way, the network device can obtain variation of CLI between terminal devices more quickly.

In a possible implementation, the first terminal device reports the first measurement report to the network device on the PUCCH and/or the PUSCH in the L1 manner and/or the L2 manner, and the first measurement report may be considered to be transmitted through a user plane (user plane) of a wireless protocol.

In a possible implementation, the method further includes: The first terminal device receives first control information from the network device, where the first control information is for triggering the first terminal device to report the first measurement report to the network device.

In this way, the first terminal device reports the measurement report to the network device based on the control information delivered by the network device, so that the network device schedules and controls reporting of the measurement report by the first terminal device.

In a possible implementation, the reporting type is the semi-persistent reporting, the first control information is scrambled by using a first identifier, and the first control information includes a first field and a second field. The first field indicates to report the first measurement report, the second field is used to activate or deactivate the semi-persistent reporting, and a maximum quantity of bits of the first field is greater than or equal to 6.

In this way, in this application, an existing field design indicating to report a channel state information (channel state information, CSI) report can still be used, to be compatible with an existing protocol, and only the maximum quantity of bits of the first field is changed, so that the first field can complete a function of indicating to report a CLI measurement report.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The first field is different from a third field, the third field is a channel state information indicator field in downlink control information, and the downlink control information is used to activate or deactivate semi-persistent channel state information reporting.

In this way, in this application, an existing field design indicating to report a CSI report is still used, to be compatible with an existing protocol, and only a design of the first field is changed, so that the first field can complete a function of indicating to report a CLI measurement report.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The second field is different from a fourth field, and the fourth field is a special domain field that is in downlink control information and that is used to activate or deactivate semi-persistent channel state information reporting.

In this way, in this application, an existing field design indicating to report a CSI report is still used, to be compatible with an existing protocol, and only a design of the second field is changed, so that the second field can complete a function of activating or deactivating semi-persistent reporting of the first measurement report.

In a possible implementation, the reporting type is the semi-persistent reporting, and the first control information is scrambled by using a first identifier. The first identifier is different from a second identifier, and the second identifier is an identifier used to scramble downlink control information for activating or deactivating semi-persistent channel state information reporting.

Optionally, the first control information includes a first field and a second field. The first field indicates to report the first measurement report, and the second field is a special domain field that is for activating or deactivating the first measurement report and that is effective on a physical downlink control channel.

In this way, in this application, an existing field design indicating to report a CSI report is still used, to be compatible with an existing protocol, and only a design of the first identifier is changed, so that the first identifier can complete a function of indicating that the first control information is for triggering reporting of the first measurement report.

In a possible implementation, the reporting type is the aperiodic reporting, the first control information includes a first field, and the first field indicates to report the first measurement report. The first field is the same as a second field, and a maximum quantity of bits of the first field is greater than or equal to 6, or the first field is different from the second field. The second field indicates to report a channel state information report.

In this way, in this application, an existing field design indicating to report a CSI report is still used, to be compatible with an existing protocol, and only a design of the first field is changed, so that the first field can complete a function of indicating to report a CLI measurement report.

In a possible implementation, the method further includes: The first terminal device receives second control information from the network device, where the second control information indicates at least one of the following to M terminal devices: whether to send a measurement signal, whether to measure CLI, or whether to report a CLI measurement report. The M terminal devices include the first terminal device.

The second control information indicates at least one of the following to a plurality of terminal devices: measurement signal sending, CLI measurement, and reporting of the CLI measurement report. This helps reduce signaling overheads, and more flexibly schedule measurement signal sending, CLI measurement, and reporting of CLI measurement reports of the plurality of terminal devices, and helps reduce resource overheads of the measurement signal, reduce unnecessary CLI measurement reporting, and improve system efficiency.

In a possible implementation, the second control information includes N sub-blocks, and a first sub-block in the N sub-blocks indicates at least one of the following to an associated terminal device in the M terminal devices: whether to send a measurement signal, whether to measure CLI, or whether to report a CLI measurement report.

In this way, flexible scheduling of the plurality of terminal devices can be completed.

In a possible implementation, the method further includes: The first terminal device receives at least one of first information and second information from the network device, where the first information includes at least one piece of measurement resource configuration information, the at least one piece of measurement resource configuration information includes first measurement resource configuration information, and the first measurement resource configuration information is used to configure a first communication resource to be used by the first terminal device to receive the first measurement signal. The second information includes at least one piece of measurement reporting configuration information, the at least one piece of measurement reporting configuration information includes first measurement reporting configuration information, and the first measurement reporting configuration information is used to configure reporting of the first measurement report.

According to the foregoing technical solution, in this application, the first terminal device can complete reception of the measurement signal and reporting of the measurement report based on the first information and the second information that are delivered by the network device.

In a possible implementation, the first measurement reporting configuration information further indicates the reporting type.

In a possible implementation, the first measurement reporting configuration information includes an identifier of the first measurement reporting configuration information, an identifier of the first communication resource, a periodicity, an offset, a PUCCH resource, a reporting indicator, or a reporting granularity.

In this way, the first terminal device can complete reporting of the measurement report based on the information.

In a possible implementation, the first measurement report includes at least one of reference signal received power of the first measurement signal and a received signal strength indicator of CLI.

In a possible implementation, the first measurement resource configuration information includes an identifier of the first communication resource, time domain resource information, frequency domain resource information, sequence information of the first measurement signal, and transmit power information of the first measurement signal.

In this way, the first terminal device can receive the measurement signal based on the communication resource indicated by the information.

In a possible implementation, the time domain resource information includes a periodicity, an offset, a start position in a slot, or duration.

In a possible implementation, the frequency domain resource information includes at least one of the following: a frequency domain start position, a bandwidth, or a sub-carrier spacing.

According to a second aspect, a measurement method is provided. The method includes: A network device receives one or more measurement reports from a first terminal device on at least one of a physical uplink control channel and a physical uplink shared channel, where the one or more measurement reports include a first measurement report, and the first measurement report includes information obtained by performing cross-link interference measurement based on a first measurement signal. A reporting type of the first measurement report includes aperiodic reporting or semi-persistent reporting.

In a possible implementation, the method further includes: The network device sends first control information to the first terminal device, where the first control information is for triggering the first terminal device to report the first measurement report to the network device.

In a possible implementation, the reporting type is the semi-persistent reporting, the first control information is scrambled by using a first identifier, and the first control information includes a first field and a second field. The first field indicates to report the first measurement report, the second field is used to activate or deactivate the semi-persistent reporting, and a maximum quantity of bits of the first field is greater than or equal to 6.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The first field is different from a third field, the third field is a channel state information indicator field in downlink control information, and the downlink control information is used to activate or deactivate semi-persistent channel state information reporting.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The second field is different from a fourth field, and the fourth field is a special domain field that is in downlink control information and that is used to activate or deactivate semi-persistent channel state information reporting.

In a possible implementation, the reporting type is the semi-persistent reporting, and the first control information is scrambled by using a first identifier. The first identifier is different from a second identifier, and the second identifier is an identifier used to scramble downlink control information for activating or deactivating semi-persistent channel state information reporting.

Optionally, the first control information includes a first field and a second field. The first field indicates to report the first measurement report, and the second field is a special domain field that is for activating or deactivating the first measurement report and that is effective on a physical downlink control channel.

In a possible implementation, the reporting type is the aperiodic reporting, the first control information includes a first field, and the first field indicates to report the first measurement report. The first field is the same as a second field, and a maximum quantity of bits of the first field is greater than or equal to 6, or the first field is different from the second field, where the second field indicates to report a channel state information report.

In a possible implementation, the method further includes: The network device sends second control information to the first terminal device, where the second control information indicates at least one of the following to M terminal devices: whether to send a measurement signal, whether to measure CLI, or whether to report a CLI measurement report. The M terminal devices include the first terminal device.

In a possible implementation, the second control information includes N sub-blocks, and a first sub-block in the N sub-blocks indicates at least one of the following to an associated terminal device in the M terminal devices: whether to send a measurement signal, whether to measure CLI, or whether to report a CLI measurement report.

In a possible implementation, the method further includes: The network device sends at least one of first information and second information to the first terminal device. The first information includes at least one piece of measurement resource configuration information, the at least one piece of measurement resource configuration information includes first measurement resource configuration information, and the first measurement resource configuration information is used to configure a first communication resource to be used by the first terminal device to receive the first measurement signal. The second information includes at least one piece of measurement reporting configuration information, the at least one piece of measurement reporting configuration information includes first measurement reporting configuration information, and the first measurement reporting configuration information is used to configure reporting of the first measurement report.

In a possible implementation, the first measurement reporting configuration information further indicates the reporting type.

In a possible implementation, the first measurement reporting configuration information includes an identifier of the first measurement reporting configuration information, an identifier of the first communication resource, a periodicity, an offset, a PUCCH resource, a reporting indicator, or a reporting granularity.

In a possible implementation, the first measurement report includes at least one of reference signal received power of the first measurement signal and a received signal strength indicator of CLI.

In a possible implementation, the first measurement resource configuration information includes an identifier of the first communication resource, time domain resource information, frequency domain resource information, sequence information of the first measurement signal, and transmit power information of the first measurement signal.

In a possible implementation, the time domain resource information includes a periodicity, an offset, a start position in a slot, or duration.

In a possible implementation, the frequency domain resource information includes at least one of the following: a frequency domain start position, a bandwidth, or a sub-carrier spacing.

According to a third aspect, a communication apparatus is provided. The communication apparatus may be used in the terminal device in the first aspect. The communication apparatus may be the terminal device, an apparatus (for example, a chip, a chip system, or a circuit) in the terminal device, or an apparatus that can be used in cooperation with the terminal device.

In a possible implementation, the terminal device may include modules or units that one-to-one correspond to the methods/operations/steps/actions described in the first aspect. The module or unit may be a hardware circuit, or may be software, or may be implemented by a hardware circuit in combination with software.

In a possible implementation, the communication apparatus includes a transceiver unit configured to receive one or more measurement signals, where the one or more measurement signals include a first measurement signal. The transceiver unit is further configured to report one or more measurement reports to a network device on a physical uplink control channel, where the one or more measurement reports include a first measurement report, and the first measurement report includes information obtained by performing cross-link interference measurement based on the first measurement signal. A reporting type of the first measurement report includes aperiodic reporting or semi-persistent reporting.

In a possible implementation, the transceiver unit is further configured to receive first control information from the network device, where the first control information is for triggering the communication apparatus to report the first measurement report to the network device.

In a possible implementation, the reporting type is the semi-persistent reporting, the first control information is scrambled by using a first identifier, and the first control information includes a first field and a second field. The first field indicates to report the first measurement report, the second field is used to activate or deactivate the semi-persistent reporting, and a maximum quantity of bits of the first field is greater than or equal to 6.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The first field is different from a third field, the third field is a channel state information indicator field in downlink control information, and the downlink control information is used to activate or deactivate semi-persistent channel state information reporting.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The second field is different from a fourth field, and the fourth field is a special domain field that is in downlink control information and that is used to activate or deactivate semi-persistent channel state information reporting.

In a possible implementation, the reporting type is the semi-persistent reporting, and the first control information is scrambled by using a first identifier. The first identifier is different from a second identifier, and the second identifier is an identifier used to scramble downlink control information for activating or deactivating semi-persistent channel state information reporting.

Optionally, the first control information includes a first field and a second field. The first field indicates to report the first measurement report, and the second field is a special domain field that is for activating or deactivating the first measurement report and that is effective on a physical downlink control channel.

In a possible implementation, the reporting type is the aperiodic reporting, the first control information includes a first field, and the first field indicates to report the first measurement report. The first field is the same as a second field, and a quantity of bits of the first field is greater than or equal to 6, or the first field is different from the second field. The second field indicates to report a channel state information report.

In a possible implementation, the transceiver unit is further configured to receive second control information from the network device, where the second control information indicates at least one of the following to M terminal devices: whether to send a measurement signal, whether to measure CLI, or whether to report a CLI measurement report. The M terminal devices include the communication apparatus.

In a possible implementation, the second control information includes N sub-blocks, and a first sub-block in the N sub-blocks indicates at least one of the following to an associated terminal device in the M terminal devices: whether to send a measurement signal, whether to measure CLI, or whether to report a CLI measurement report.

In a possible implementation, the transceiver unit is further configured to receive at least one of first information and second information from the network device. The first information includes at least one piece of measurement resource configuration information, the at least one piece of measurement resource configuration information includes first measurement resource configuration information, and the first measurement resource configuration information is used to configure a first communication resource to be used by the first terminal device to receive the first measurement signal. The second information includes at least one piece of measurement reporting configuration information, the at least one piece of measurement reporting configuration information includes first measurement reporting configuration information, and the first measurement reporting configuration information is used to configure reporting of the first measurement report.

In a possible implementation, the first measurement reporting configuration information further indicates the reporting type.

In a possible implementation, the first measurement reporting configuration information includes an identifier of the first measurement reporting configuration information, an identifier of the first communication resource, a periodicity, an offset, a PUCCH resource, a reporting indicator, or a reporting granularity.

In a possible implementation, the first measurement report includes at least one of reference signal received power of the first measurement signal and a received signal strength indicator of CLI.

In a possible implementation, the first measurement resource configuration information includes an identifier of the first communication resource, time domain resource information, frequency domain resource information, sequence information of the first measurement signal, and transmit power information of the first measurement signal.

In a possible implementation, the time domain resource information includes a periodicity, an offset, a start position in a slot, or duration.

In a possible implementation, the frequency domain resource information includes at least one of the following: a frequency domain start position, a bandwidth, or a sub-carrier spacing.

According to a fourth aspect, a communication apparatus is provided. The communication apparatus may be used in the network device in the second aspect. The communication apparatus may be the network device, an apparatus (for example, a chip, a chip system, or a circuit) in the network device, or an apparatus that can be used in cooperation with the network device.

In a possible implementation, the communication apparatus may include modules or units that one-to-one correspond to the methods/operations/steps/actions described in the second aspect. The module or unit may be a hardware circuit, or may be software, or may be implemented by a hardware circuit in combination with software.

In a possible implementation, the communication apparatus includes a transceiver unit configured to receive one or more measurement reports from a first terminal device, where the one or more measurement reports include a first measurement report, and the first measurement report includes information obtained by performing cross-link interference measurement based on a first measurement signal. A reporting type of the first measurement report includes aperiodic reporting or semi-persistent reporting.

In a possible implementation, the transceiver unit is further configured to send first control information to the first terminal device, where the first control information is for triggering the first terminal device to report the first measurement report to the communication apparatus.

In a possible implementation, the reporting type is the semi-persistent reporting, the first control information is scrambled by using a first identifier, and the first control information includes a first field and a second field. The first field indicates to report the first measurement report, the second field is used to activate or deactivate the semi-persistent reporting, and a maximum quantity of bits of the first field is greater than or equal to 6.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The first field is different from a third field, the third field is a channel state information indicator field in downlink control information, and the downlink control information is used to activate or deactivate semi-persistent channel state information reporting.

In a possible implementation, the reporting type is the semi-persistent reporting, the first control information is scrambled by using a first identifier, and the first control information includes a first field and a second field. The first field indicates to report the first measurement report, and the second field is a special domain field that is for activating or deactivating the first measurement report and that is effective on a physical downlink control channel. The second field is different from a fourth field, and the fourth field is a special domain field that is in downlink control information and that is used to activate or deactivate semi-persistent channel state information reporting.

In a possible implementation, the reporting type is the semi-persistent reporting, and the first control information is scrambled by using a first identifier. The first identifier is different from a second identifier, and the second identifier is an identifier used to scramble downlink control information for activating or deactivating semi-persistent channel state information reporting.

Optionally, the first control information includes a first field and a second field. The first field indicates to report the first measurement report, and the second field is a special domain field that is for activating or deactivating the first measurement report and that is effective on a physical downlink control channel.

In a possible implementation, the reporting type is the aperiodic reporting, the first control information includes a first field, and the first field indicates to report the first measurement report. The first field is the same as a second field, and a maximum quantity of bits of the first field is greater than or equal to 6, or the first field is different from the second field, where the second field indicates to report a channel state information report.

In a possible implementation, the transceiver unit is further configured to send second control information to the first terminal device, where the second control information indicates at least one of the following to M terminal devices: whether to send a measurement signal, whether to measure CLI, or whether to report a CLI measurement report. The M terminal devices include the first terminal device.

In a possible implementation, the second control information includes N sub-blocks, and a first sub-block in the N sub-blocks indicates at least one of the following to an associated terminal device in the M terminal devices: whether to send a measurement signal, whether to measure CLI, or whether to report a CLI measurement report.

In a possible implementation, the transceiver unit is further configured to send at least one of first information and second information to the first terminal device. The first information includes at least one piece of measurement resource configuration information, the at least one piece of measurement resource configuration information includes first measurement resource configuration information, and the first measurement resource configuration information is used to configure a first communication resource to be used by the first terminal device to receive the first measurement signal. The second information includes at least one piece of measurement reporting configuration information, the at least one piece of measurement reporting configuration information includes first measurement reporting configuration information, and the first measurement reporting configuration information is used to configure reporting of the first measurement report.

In a possible implementation, the first measurement reporting configuration information further indicates the reporting type.

In a possible implementation, the first measurement reporting configuration information includes an identifier of the first measurement reporting configuration information, an identifier of the first communication resource, a periodicity, an offset, a PUCCH resource, a reporting indicator, or a reporting granularity.

In a possible implementation, the first measurement report includes at least one of reference signal received power of the first measurement signal and a received signal strength indicator of CLI.

In a possible implementation, the first measurement resource configuration information includes an identifier of the first communication resource, time domain resource information, frequency domain resource information, sequence information of the first measurement signal, and transmit power information of the first measurement signal.

In a possible implementation, the time domain resource information includes a periodicity, an offset, a start position in a slot, or duration.

In a possible implementation, the frequency domain resource information includes at least one of the following: a frequency domain start position, a bandwidth, or a sub-carrier spacing.

According to a fifth aspect, a communication apparatus is provided, including a processor. The processor is configured to: by executing a computer program or instructions or through a logic circuit, enable the communication apparatus to perform the method according to the first aspect and any one of the possible implementations of the first aspect, or enable the communication apparatus to perform the method according to the second aspect and any one of the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided, including a logic circuit and an input/output interface. The input/output interface is configured to input and/or output a signal. The logic circuit is configured to perform the method according to the first aspect and any one of the possible implementations of the first aspect, or the logic circuit is configured to perform the method according to the second aspect and any one of the possible implementations of the second aspect.

According to a seventh aspect, a computer-readable storage medium is provided. The computer-readable storage medium stores a computer program or instructions. When the computer program or the instructions are run on a computer, the method according to the first aspect and any one of the possible implementations of the first aspect is performed, or the method according to the second aspect and any one of the possible implementations of the second aspect is performed.

According to an eighth aspect, a computer program product is provided, including instructions. When the instructions are run on a computer, the method according to the first aspect and any one of the possible implementations of the first aspect is performed, or the method according to the second aspect and any one of the possible implementations of the second aspect is performed.

According to a ninth aspect, a communication system is provided, including a first terminal device and a network device. The first terminal device is configured to perform the method according to the first aspect and any one of the possible implementations of the first aspect, and the network device is configured to perform the method according to the second aspect and any one of the possible implementations of the second aspect.

For descriptions of beneficial effects of the second aspect to the ninth aspect, refer to the descriptions of the beneficial effects of the first aspect. Details are not described herein again.

### BRIEF DESCRIPTION OF DRAWINGS

FIG. 1 is a diagram of an application scenario 100 according to an embodiment of this application;
FIG. 2 is a diagram of subband full duplex;
FIG. 3 is a diagram of an interaction procedure of a measurement method 300 according to an embodiment of this application;
FIG. 4 is a diagram of frequency domain resource configurations according to an embodiment of this application;
FIG. 5 is a diagram of an interaction procedure of a measurement method 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application;
FIG. 9 is a block diagram of a communication apparatus 900 according to an embodiment of this application; and
FIG. 10 is a block diagram of a communication apparatus 1000 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system or systems evolved after 5G such as a new radio (new radio, NR) system and a 6^{th} generation (6^{th} generation, 6G) system, and NTN systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station or a non-terrestrial device such as an unmanned aerial vehicle, a hot air balloon, a low-orbit satellite, a medium-orbit satellite, or a high-orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to both an FDD system and a TDD system. The technical solutions of this application are not only applicable to a low-frequency scenario (sub 6G), but also applicable to a high-frequency scenario (above 6 GHz), terahertz, optical communication, and the like. The technical solutions of this application are not only applicable to communication between a network device and a terminal, but also applicable to communication between network devices, communication between terminals, communication in an internet of vehicles, communication in an internet of things, communication in an industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, the base station corresponds to a 5G base station, and the 5G base station is directly connected to the 5G core; or the CN is a 6G core, the base station is a 6G base station, and the 6G base station is directly connected to the 6G core. The technical solutions of this application are also applicable to a dual connectivity (dual connectivity, DC) scenario in which the terminal is connected to at least two base stations.

The technical solutions in embodiments of this application are alternatively applicable to a macro-micro scenario including different forms of base stations in a communication network. For example, the base station may be a satellite, an air balloon station, an uncrewed aerial vehicle station, or the like. The technical solutions of this application are also applicable to a scenario in which both a wide-coverage base station and a small-coverage base station exist.

The technical solutions in embodiments of this application may be applied to a scenario in which a service has a requirement for high reliability, for example, a port, industrial manufacturing, transportation, and a coal mine scenario.

The technical solutions in embodiments of this application may be further applied to 5.5G, 6G, and later wireless communication systems. Application scenarios include but are not limited to scenarios such as terrestrial cellular communication, NTN, satellite communication, high-altitude platform station (high-altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in cooperation with the terminal device. In this application, the chip system may include a chip, or may include the chip and another discrete component.

The network device in embodiments of this application is a device having a wireless transceiver function, and is configured to communicate with the terminal device. An access network device may be a node in a radio access network (radio access network, RAN), and may be referred to as a base station, or may be referred to as a RAN node. The access network device may be an evolved NodeB (evolved NodeB, eNB, or eNodeB) in LTE, a base station in a 5G network, for example, a gNodeB (gNB), a base station in a public land mobile network (public land mobile network, PLMN) evolved after 5G, a broadband network gateway (broadband network gateway, BNG), an aggregation switch, a 3^{rd} generation partnership project (3^{rd} generation partnership project, 3GPP) access device, or the like. For example, the foregoing RAN may be configured as a RAN defined in a 3GPP protocol, an open radio access network (open radio access network, O-RAN), or a cloud access network (cloud radio access network, C-RAN).

The network device in embodiments of this application may further include various forms of base stations, for example, a macro base station, a micro base station (also referred to as a small cell), a relay station, a transmitting and receiving point (transmitting and receiving point, TRP), a transmitting point (transmitting point, TP), a mobile switching center, a device that functions as a base station in device-to-device (device-to-device, D2D), vehicle-to-everything (vehicle-to-everything, V2X), or machine-to-machine (machine-to-machine, M2M) communication, and a network device in an NTN communication system. This is not specifically limited in this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

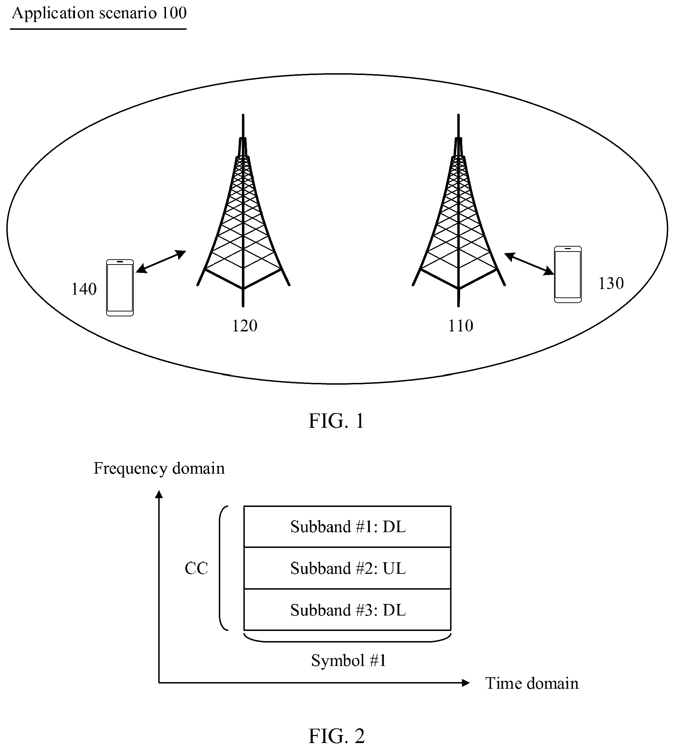

FIG. 1 is a diagram of an application scenario 100 according to an embodiment of this application. As shown in FIG. 1, a communication apparatus in the application scenario 100 includes a network device 110, a network device 120, a terminal device 130, and a terminal device 140. Uplink communication or downlink communication may be performed between the network device 110 and the terminal device 130, and uplink communication or downlink communication may be performed between the network device 120 and the terminal device 140. This is not limited herein. The terminal device 130 and the terminal device 140 may also communicate with each other. For example, the terminal device 130 receives an SRS sent by the terminal device 140. It may be understood that the application scenario 100 is merely used as an example for understanding, and cannot limit the protection scope claimed in this application.

In the application scenario 100, the terminal device 130 is located within a coverage area of the network device 110, that is, a connection is established between the terminal device 130 and the network device 110. The terminal device 140 is located within a coverage area of the network device 120, that is, a connection is established between the terminal device 140 and the network device 120. Downlink communication or uplink communication between the network device 110 and the terminal device 130 affects uplink communication or downlink communication between the network device 120 and the terminal device 140. In other words, CLI exists between the terminal device 130 and the terminal device 140.

It may be understood that quantities of terminal devices and network devices included in the application scenario 100 are not limited in this embodiment of this application. The terminal device 130 or the terminal device 140 may be any terminal device listed above, or the network device 110 or the network device 120 may be any network device listed above.

It may be understood that, in the application scenario 100, an SBFD solution may be used for communication between the network device 110 and the terminal device 130, and the SBFD solution may also be used for communication between the network device 120 and the terminal device 140. This is not limited herein. For descriptions of SBFD, refer to FIG. 2.

FIG. 2 is a diagram of subband full duplex. As shown in FIG. 2, one component carrier (component carrier, CC) is divided into three subbands, for example, a subband #1, a subband #2, and a subband #3. For example, on a symbol #1, both transmission directions configured for the subband #1 and the subband #3 are downlink (downlink, DL), and a transmission direction configured for the subband #2 is uplink (uplink, UL). Signal power in the subband #1 leaks to the subband #2, and this causes interference between a DL and a UL. In other words, DL communication in the subband #1 causes interference to UL communication in the subband #2.

In the application scenario 100, to perform CLI measurement between the terminal device 130 and the terminal device 140, the terminal device 130 receives the SRS from the terminal device 140, and measures the SRS. Further, the terminal device 130 feeds back an SRS measurement result to the network device 110 by using radio resource control (radio resource control, RRC) signaling. However, in a manner in which the terminal device 130 reports the SRS measurement result to the network device 110, the network device 110 cannot obtain variation of the CLI between the terminal device 130 and the terminal device 140 more quickly. Specifically, reporting, by the terminal device 130, the SRS measurement result to the network device 110 by using the RRC signaling is a semi-static manner in which reporting frequency is low and the network device 110 cannot obtain the variation of the CLI between the terminal device 130 and the terminal device 140 more quickly.

In view of the foregoing technical problem, this application provides a measurement method and a communication apparatus, so that a network device can obtain variation of CLI between terminal devices more quickly.

The following describes the measurement method and the communication apparatus in embodiments of this application with reference to the accompanying drawings.

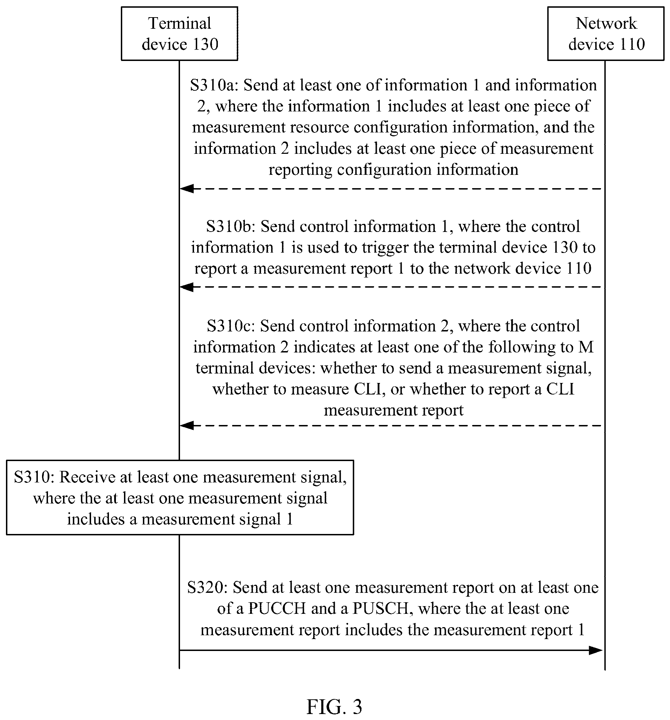

FIG. 3 is a diagram of an interaction procedure of a measurement method 300 according to an embodiment of this application. The method procedure in FIG. 3 may be performed by a terminal device 130 and a network device 110, or may be performed by modules and/or components (for example, chips or integrated circuits) that have corresponding functions and that are installed in the terminal device 130 and the network device 110. This is not limited in this application. The following uses the terminal device 130 and the network device 110 as an example for description. As shown in FIG. 3, the method 300 includes the following steps.

S310: The terminal device 130 receives one or more measurement signals, where the one or more measurement signals include a measurement signal 1.

Specifically, the one or more measurement signals received by the terminal device 130 are from another terminal device. For example, the terminal device 130 receives the measurement signal 1 from a terminal device 140, the terminal device 130 receives a measurement signal 2 from a terminal device 150 (not shown in FIG. 1), and the terminal device 130 may further receive a measurement signal 3 from a terminal device 160 (not shown in FIG. 1).

In conclusion, the terminal device 130 receives the one or more measurement signals from one or more terminal devices, and each measurement signal corresponds to one terminal device. For example, the measurement signal 1 corresponds to the terminal device 140, the measurement signal 2 corresponds to the terminal device 150, and the measurement signal 3 corresponds to the terminal device 160.

It may be understood that the foregoing measurement signal is a generalized concept of signals used for channel measurement. For example, the measurement signal includes an SRS, or may include a signal specially introduced for CLI measurement. This is not limited herein.

In a possible implementation, the measurement signal is an SRS. In a specific implementation, the SRS is an existing SRS used for uplink codebook transmission, an existing SRS used for uplink non-codebook transmission, an existing SRS used for uplink antenna selection, or an existing SRS used for positioning. In another specific implementation, the SRS is a dedicated SRS introduced for CLI measurement. This is not limited.

In a possible implementation, the SRS may satisfy one or more of the following features:
- The SRS uses a single antenna port (antenna port, AP);
- the SRS does not support frequency hopping (frequency hopping, FH); and
- a maximum quantity of cyclic shifts (cyclic shifts, CSs) of an SRS sequence is greater than 12, for example, 18, 24, 36, or 48.

In a possible implementation, the SRS may be sent in a periodic manner, an aperiodic manner, or a semi-persistent manner.

It may be understood that the foregoing content about the SRS may be implemented independently from the technical solutions in embodiments of this application.

S320: The terminal device 130 reports one or more measurement reports to the network device 110 on at least one of a PUCCH and a PUSCH, where the one or more measurement reports include a measurement report 1.

Correspondingly, the network device 110 receives, on the at least one of the PUCCH and the PUSCH, the one or more measurement reports reported by the terminal device 130.

It may be understood that each measurement report corresponds to at least one measurement signal. For example, the measurement report 1 corresponds to the measurement signal 1. More specifically, the measurement report 1 includes information, in other words, a measurement result or a measurement report, obtained by the terminal device 130 by performing CLI measurement on the measurement signal 1.

Specifically, the terminal device 130 performs CLI measurement on the received measurement signal, and obtains a measurement report associated with the measurement signal. Correspondingly, the terminal device 130 reports the measurement reports to the network device 110 on the PUCCH and/or the PUSCH, and the network device 110 determines variation of CLI between terminal devices based on the measurement reports. For example, the network device 110 obtains variation of CLI between the terminal device 130 and the terminal device 140 based on the measurement report 1 (corresponding to the measurement signal 1), the network device 110 obtains variation of CLI between the terminal device 130 and the terminal device 150 based on a measurement report 2 (corresponding to the measurement signal 2), and the network device 110 obtains variation of CLI between the terminal device 130 and the terminal device 150 based on a measurement report 3 (corresponding to the measurement signal 3).

In conclusion, the terminal device reports the measurement report to the network device on the PUCCH and/or the PUSCH, so that in this application, the terminal device can report the measurement report to the network device more flexibly and more quickly. In this way, the network device can obtain the variation of the CLI between the terminal devices more quickly.

Optionally, the terminal device 130 reports the measurement report on the PUCCH and/or the PUSCH in a level (level) 1 manner and/or a level 2 manner, and the measurement report may be considered to be transmitted through a user plane (user plane) of a wireless protocol.

Optionally, in a possible implementation, the method 300 may further include:
S310a: The network device 110 sends at least one of information 1 and information 2 to the terminal device 130, where the information 1 includes at least one piece of measurement resource configuration information, and the information 2 includes at least one piece of measurement reporting configuration information.

Specifically, each of the at least one piece of measurement resource configuration information is used to configure one communication resource, and the communication resource is used by the terminal device 130 to receive the measurement signal. For example, the at least one piece of measurement resource configuration information includes measurement resource configuration information 1, the measurement resource configuration information 1 is used to configure a communication resource 1, and the terminal device 130 receives the measurement signal 1 by using the communication resource 1. Each of the at least one piece of measurement reporting configuration information is used to configure reporting of the measurement report. For example, the at least one piece of measurement reporting configuration information includes measurement reporting configuration information 1, the measurement reporting configuration information 1 is used to configure reporting of the measurement report 1, and the measurement report 1 is obtained by the terminal device 130 by performing CLI measurement on the measurement signal 1. In this way, the terminal device 130 can receive the measurement signal and report the measurement report based on the information 1 and the information 2 that are delivered by the network device, so that the network device 110 schedules and controls the terminal device 130.

It may be understood that when the network device 110 delivers only the information 1 to the terminal device 130, the information 2 may be configured in a protocol-predefined manner, and the network device 110 does not need to indicate the terminal device 130 how to report the measurement report. When the network device 110 delivers only the information 2 to the terminal device 130, the information 1 may be configured in a protocol-predefined manner, and the network device 110 does not need to indicate the terminal device 130 how to receive the measurement signal.

In a possible implementation, the measurement resource configuration information 1 includes an identifier of the communication resource 1, time domain resource information, frequency domain resource information, sequence information of the measurement signal 1, transmit power information of the measurement signal 1, and the like. The time domain resource information includes a time domain resource type (for example, periodic, aperiodic, or semi-persistent). In this way, the network device 110 indicates the foregoing information to the terminal device 130, so that the terminal device 130 can receive the measurement signal 1 based on the communication resource indicated by the information.

It should be understood that information included in the measurement status configuration information 1 may be all of the information listed above, or may be a part of the information listed above. This is not limited herein. The information can be used by the terminal device 130 to receive the measurement signal.

It may be understood that, if the communication resource 1 is configured to be periodic, it means that the communication resource 1 appears periodically. Further, the measurement resource configuration information 1 may include a periodicity, an offset, a start position in a slot, duration, or the like. If the communication resource 1 is configured to be aperiodic, it means that the communication resource 1 appears aperiodically, and signaling needs to be used to further trigger or indicate the communication resource 1 to take effect. For example, L1/L2 signaling may be used, where the L1/L2 signaling includes a media access control-control element (media access control-control element, MAC CE), downlink control information (downlink control information, DCI), or the like. If the communication resource 1 is configured to be semi-persistent, signaling needs to be used to further trigger or indicate activation of the communication resource 1, so that the communication resource 1 can then appear periodically.

Optionally, an activated semi-persistent communication resource may also be deactivated, for example, deactivated by using a MAC CE or DCI. Once the communication resource is deactivated, the communication resource does not appear periodically. If the communication resource 1 is configured to be periodic or semi-persistent, the measurement resource configuration information 1 may further include the periodicity, the offset, the start position in the slot, the duration, or the like.

In addition, the frequency domain resource information in the measurement resource configuration information 1 includes at least one of a frequency domain start position, a bandwidth, or a sub-carrier spacing (sub-carrier spacing, SCS). In this way, the network device 110 indicates any one of the foregoing information to the terminal device 130, so that the terminal device 130 can receive the measurement signal 1 based on a frequency domain resource indicated by any one of the foregoing information.

It should be understood that information included in the frequency domain resource information in the measurement resource configuration information 1 may be all of the information listed above, or may be a part of the information listed above. This is not limited herein. The information can be used by the terminal device 130 to receive the measurement signal.

In a possible implementation, a frequency domain position of the communication resource 1 varies with reported indicators (including reference signal received power (reference signal received power, RSRP) of the measurement signal and a received signal strength indicator (received signal strength indicator, RSSI) of the CLI). For example, the terminal device 130 measures the RSRP of the measurement signal in an uplink subband, and the terminal device 130 measures the RSSI of the CLI in a downlink subband. It may be understood that the measurement signal 1 is sent in the uplink subband.

Further, the terminal device 130 sends the measurement signal and performs CLI measurement only in an active bandwidth part (bandwidth part, BWP). For example, the terminal device 130 measures the RSRP of the measurement signal in an active UL BWP in the UL subband, and the terminal device 130 measures the RSSI of the CLI in an active DL BWP in the DL subband.

Further, for a typical configuration {DUD} of SBFD, there may be two inconsecutive DL subbands, and a measurement resource (which is mainly a frequency domain resource) for the RSSI of the CLI may be indicated in the following several manners:
1. Measurement is performed only in one of the DL subbands, and a specific DL subband is predefined in a protocol or indicated by the network device 110 by using signaling.
2. Measurement is performed in the two DL subbands, which specifically includes the following:
   (a) Two inconsecutive DL subband resources are respectively defined as two measurement resources.
   (b) Two inconsecutive DL subband resources are defined as one measurement resource, which may specifically include the following:
      i. The measurement resource is configured with two frequency domain start positions and/or bandwidths.
      ii. The measurement resource is configured with one frequency domain start position and/or bandwidth. If a configured frequency domain resource includes a resource of the UL subband, the configured frequency domain resource is not a resource for the RSSI of the CLI by default.

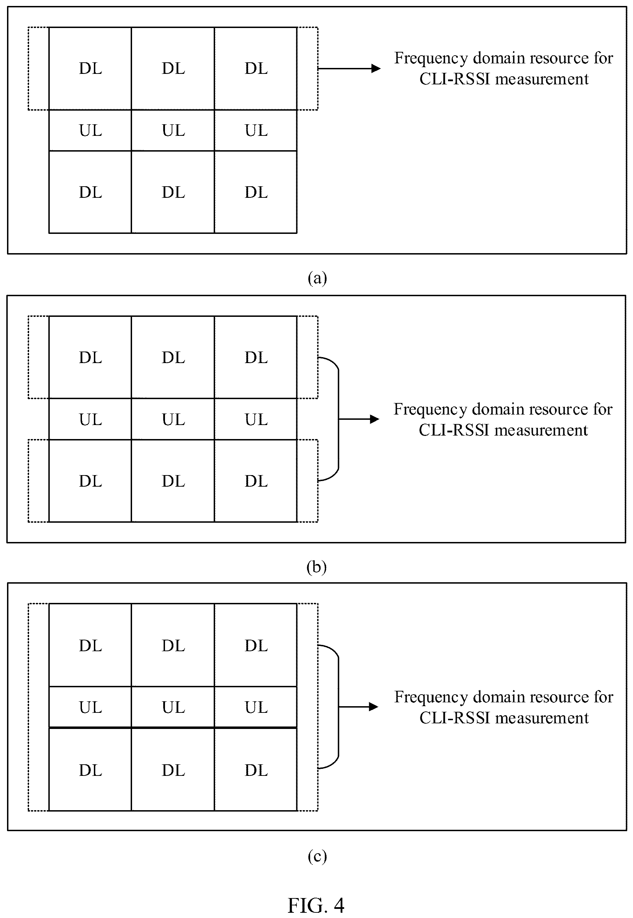

For frequency domain resource configurations of the {DUD}, refer to FIG. 4.

FIG. 4 is a diagram of frequency domain resource configurations according to an embodiment of this application. As shown in (a) in FIG. 4, when there are two inconsecutive DL subbands (where the two DL subbands are separated by a UL subband), the network device 110 indicates a specific DL subband by using the frequency domain resource information in the information 1 (refer to the manner 1). As shown in (b) in FIG. 4, when there are two inconsecutive DL subbands, the network device 110 separately indicates the two DL subbands by using the frequency domain information in the information 1 (refer to the first possible manner of b in the manner 2). As shown in (c) in FIG. 4, when there are two inconsecutive DL subbands, the network device 110 indicates these three subbands by using the frequency domain resource information in the information 1 (refer to the second possible manner of b in the manner 2), and it may be defined that a UL subband is not used for measurement of the RSSL of the CLI. Correspondingly, the terminal device 130 measures the RSSI of the CLI based on the frequency domain resource indicated by the frequency domain resource information in the information 1.

In a possible implementation, for measurement reports in the two DL subbands in the manner 2, the terminal device 130 separately reports the two measurement reports, or reports a sum of the two measurement reports, or reports an average value of the two measurement reports. For a manner of reporting the two measurement reports, the terminal device 130 may report the two measurement reports, or the terminal device 130 may report the two measurement reports in a differential reporting manner. For example, the terminal device 130 reports a measurement report of a first DL subband, and reports a difference obtained by subtracting the measurement report of the first DL subband from a measurement report of a second DL subband. This is not limited herein.

In a possible implementation, the measurement reporting configuration information 1 may be used to configure a reporting type of the measurement report 1. Specifically, the reporting type of the measurement report 1 includes any one of periodic reporting, aperiodic reporting, and semi-persistent reporting.

For periodic reporting, the measurement reporting configuration information 1 includes an identifier of the measurement reporting configuration information 1, the identifier of the communication resource 1, the periodicity, the offset, a PUCCH resource, a reporting indicator, a reporting granularity, or the like. Because the measurement reporting configuration information 1 is associated with the communication resource 1, the measurement reporting configuration information 1 may include the identifier of the communication resource 1. The reporting granularity indicates whether the measurement report 1 is at a subband level or a wideband level. For periodic reporting, the terminal device 130 may report the measurement report 1 to the network device 110 on the PUCCH.

For semi-persistent reporting, the terminal device 130 may report the measurement report 1 on the PUCCH, or may report the measurement report 1 on the PUSCH. For semi-persistent reporting on the PUCCH, this application supports a manner of "RRC configuration+MAC CE activation/deactivation". To be specific, the network device 110 first configures the measurement reporting configuration information 1 by using RRC signaling, where the measurement reporting configuration information 1 includes the identifier of the measurement reporting configuration information 1, the identifier of the communication resource 1, the periodicity, the offset, the PUCCH resource, the reporting indicator, the reporting granularity, or the like. Further, the network device 110 activates or deactivates the periodic reporting by using a MAC CE. In this way, the terminal device 130 determines to report configuration information of the measurement report 1 to the network device 110, so as to better complete reporting the measurement report to the network device 110.

For semi-persistent reporting on the PUSCH, this application supports a manner of "RRC configuration+DCI activation/deactivation". To be specific, the network device 110 first configures the measurement reporting configuration information 1 by using the RRC signaling, where the measurement reporting configuration information 1 includes the following: the identifier of the measurement reporting configuration information 1, the identifier of the communication resource 1, the periodicity, the offset, the PUCCH resource, the reporting indicator, the reporting granularity, or the like. Further, the network device 110 activates or deactivates the periodic reporting by using DCI.

For aperiodic reporting, the terminal device 130 may report the measurement report 1 on the PUSCH. This application supports a manner of "RRC configuration+DCI activation". To be specific, the network device 110 first configures the measurement reporting configuration information 1 by using the RRC signaling, where the measurement reporting configuration information 1 includes the following: the identifier of the measurement reporting configuration information 1, the identifier of the communication resource 1, the reporting indicator, the reporting granularity, or the like. Further, the network device 110 activates the aperiodic reporting by using DCI.

Optionally, the reporting type of the measurement report 1 may further include event-triggered reporting. The event-triggered reporting means that the measurement reporting is triggered only when an event occurs. In a possible implementation, reporting of a corresponding measurement result is triggered only when the measured SRS-RSRP or CLI-RSSI exceeds a specific threshold. Otherwise, reporting is not triggered. In a possible implementation, event-triggered reporting is carried on the PUCCH or the PUSCH. In a possible implementation, event triggering may be combined with other reporting types, for example, periodic reporting+event-triggered reporting, aperiodic reporting+event-triggered reporting, or semi-persistent reporting+event-triggered reporting. In a possible implementation, event triggering may exist independently of other reporting types.

In a possible implementation, the measurement signal and the measurement reporting type satisfy the following relationships:

| Measurement signal | Periodic measurement reporting | Semi-persistent measurement reporting | Aperiodic measurement reporting |
|---|---|---|---|
| Periodic measurement signal | Support | Support | Support |
| Semi-persistent measurement signal | Not support | Support | Support |
| Aperiodic measurement signal | Not support | Not support | Support |

Specifically, for different types of measurement signals, this application supports different types of reporting manners. For example, for the periodic measurement signal, this application supports any one of the periodic measurement reporting, the semi-persistent measurement reporting, and the aperiodic measurement reporting. For the semi-persistent measurement signal, this application supports any one of the semi-persistent measurement reporting and the aperiodic measurement reporting, and does not support the periodic measurement reporting. For the aperiodic measurement signal, this application supports only the aperiodic measurement reporting, and does not support the periodic reporting and the semi-persistent measurement reporting.

Optionally, for the semi-persistent reporting or the aperiodic reporting, the method 300 may further include:
S310b: The terminal device 130 receives control information 1 from the network device 110, where the control information 1 is for triggering the terminal device 130 to report the measurement report 1 to the network device 110.

Specifically, the control information 1 is downlink control information. For example, the control information 1 may be a DCI format 0_1 or a DCI format 0_2.

Specifically, when the reporting type of the measurement report 1 is the semi-persistent reporting, there are the following possible implementations.

In a possible implementation, the control information 1 is scrambled by using an identifier 1, and the control information 1 further includes a field 1 and a field 2. The field 1 indicates to report the measurement report 1, the field 2 is a special domain field that is for activating or deactivating the measurement report 1 and that is effective on a physical downlink control channel (physical downlink control channel, PDCCH), and a maximum quantity of bits of the field 1 is greater than or equal to 6. For example, the identifier 1 may be a semi persistent-channel state information-radio network temporary identifier (semi persistent-channel state information-radio network temporary identifier, SP-CSI-RNTI). For example, the field 1 is a CSI request indicator field. For example, the field 2 includes the following fields and corresponding value settings:
In an example 1, when the field 2 is used to activate the measurement report 1, for a format of the field 2, refer to Table 1.

**Table 1**

| | **Control information 1** |
|---|---|
| **Hybrid automatic repeat request process number (HARQ process number)** | Set to all 0s |
| **Redundancy version (redundancy version)** | Set to all 0s |

Specifically, values of bit fields of the hybrid automatic repeat request process number and values of bit fields of the redundancy version in the field 2 are all set to 0, to indicate, to the terminal device 130, a meaning of activating the measurement report 1. For meanings of the hybrid automatic repeat request process number and the redundancy version, refer to an existing standard. Details are not described herein again.

In an example 2, when the field 2 is used to deactivate the measurement report 1, for a format of the field 2, refer to Table 2.

**Table 2**

| | Control information 1 |
|---|---|
| Hybrid automatic repeat request process number | Set to all 0s |
| Modulation and coding scheme (modulation and coding scheme) | Set to all 1s |
| Resource block assignment (resource block assignment) | If a higher layer only configures resource allocation (resource allocation, RA) as a type 0, set to all 0s; |
| | if the higher layer only configures the RA as a type 1, set to all 1s; |
| | if the higher layer configures the RA to dynamically change between the type 0 and the type 1, and a value of a most significant bit (most significant bit, MSB) is '0, set to all 0s; otherwise, set to all 1s; or |
| | for DCI 0_1 for which the higher layer configures the RA as a type 2, if µ=0, set to all 1s; or if µ=1, set to all 0s. |
| Redundancy version | Set to all 0s |

µ is a parameter related to the SCS. If µ=0, the SCS=15 kHz. If µ=1, the SCS=30 kHz.

Specifically, the values of the bit fields of the hybrid automatic repeat request process number in the field 2 are set to all 0s, values of bit fields of the modulation and coding scheme are set to all 1s, values of bit fields of the resource block assignment are set to all 0s or all 1s based on different RA types, and the values of the bit fields of the redundancy version are set to all 0s, to indicate, to the terminal device 130, a meaning of deactivating the measurement report 1. For meanings of the modulation and coding scheme and the resource block assignment, refer to an existing standard. Details are not described herein again.

In a possible implementation, the control information 1 is scrambled by using an identifier 1, and the control information 1 includes a field 3 and a field 4. The field 3 indicates to report the measurement report 1, and the field 4 is a special domain field that is for activating or deactivating the measurement report 1 and that is effective on a PDCCH. The field 3 is a new field, and is different from a CSI indicator field in downlink control information for activating or deactivating semi-persistent CSI reporting. For example, the identifier 1 may be an SP-CSI-RNTI. For example, the field 4 includes the following fields and corresponding value settings:

In an example 3, when the field 4 is used to activate the measurement report 1, for a format of the field 4, refer to Table 3.

**Table 3**

| | **Control information 1** |
|---|---|
| **Hybrid automatic repeat request process number** | Set to all 0s |
| **Redundancy version** | Set to all 0s |

Specifically, values of bit fields of the hybrid automatic repeat request process number and values of bit fields of the redundancy version in the field 4 are all set to 0, to indicate, to the terminal device 130, a meaning of activating the measurement report 1.

In an example 4, when the field 4 is used to deactivate the measurement report 1, for a format of the field 4, refer to Table 4.

**Table 4**

| | Control information 1 |
|---|---|
| Hybrid automatic repeat request process number | Set to all 0s |
| Modulation and coding scheme | Set to all 1s |
| Resource block assignment | If a higher layer only configures RA as a type 0, set to all 0s; if the higher layer only configures the RA as a type 1, set to all 1s; |
| | if the higher layer configures the RA to dynamically change between the type 0 and the type 1, and an MSB value is '0, set to all 0s; otherwise, set to all 1s; or |
| | for DCI 0_1 for which the higher layer configures a type of the RA as 2, if µ=0, set to all 1s; or if µ=1, set to all 0s. |
| Redundancy version | Set to all 0s |

Specifically, the values of the bit fields of the hybrid automatic repeat request process number in the field 4 are set to all 0s, values of bit fields of the modulation and coding scheme are set to all 1s, values of bit fields of the resource block assignment are set to all 0s or all 1s based on different RA types, and the values of the bit fields of the redundancy version are set to all 0s, to indicate, to the terminal device 130, a meaning of deactivating the measurement report 1.

In a possible implementation, the control information 1 is scrambled by using an identifier 1, and the control information 1 includes a field 5 and a field 6. The field 5 indicates to report the measurement report 1, and the field 6 is a special domain field that is for activating or deactivating the measurement report 1 and that is effective on a PDCCH. The field 6 is a new field, and is different from a special domain field that is in existing downlink control information and that is used to activate or deactivate semi-persistent CSI reporting. For example, the identifier 1 may be an SP-CSI-RNTI.

In an example 5, when the field 6 is used to activate the measurement report 1, for a format of the field 6, refer to Table 5.

**Table 5**

| | Control information 1 |
|---|---|
| Hybrid automatic repeat request process number | Set to all 1s |
| Redundancy version | Set to all 1s |

Specifically, values of bit fields of the hybrid automatic repeat request process number and values of bit fields of the redundancy version in the field 6 are all set to 1, to indicate, to the terminal device 130, a meaning of activating the measurement report 1.

In an example 6, when the field 6 is used to deactivate the measurement report 1, for a format of the field 6, refer to Table 6.

**Table 6**

| | Control information 1 |
|---|---|
| Hybrid automatic repeat request process number | Set to all 1s |
| Modulation and coding scheme | Set to all 1s |
| Resource block assignment | If a higher layer only configures RA as a type 0, set to all 0s; |
| | if the higher layer only configures the RA as a type 1, set to all 1s; |
| | if the higher layer configures the RA to dynamically change between the type 0 and the type 1, and an MSB value is '0, set to all 0s; otherwise, set to all 1s; or |
| | for DCI 0_1 for which the higher layer configures a type of the RA as 2, if µ=0, set to all 1s; or if µ=1, set to all 0s. |
| Redundancy version | Set to all 1s |

Specifically, the values of the bit fields of the hybrid automatic repeat request process number in the field 6 are set to all 1s, values of bit fields of the modulation and coding scheme are set to all 1s, values of bit fields of the resource block assignment are set to all 0s or all 1s based on different RA types, and the values of the bit fields of the redundancy version are set to all 1s, to indicate, to the terminal device 130, a meaning of deactivating the measurement report 1.

In a possible implementation, the control information 1 is scrambled by using an identifier 2, and the control information 1 further includes a field 7 and a field 8. The field 7 indicates to report the measurement report 1, and the field 8 is a special domain field that is for activating or deactivating the measurement report 1 and that is effective on a PDCCH. The identifier 2 is a new identifier, and is different from an existing identifier used to scramble DCI for activating or deactivating semi-persistent CSI reporting, namely, an SP-CSI-RNTI. For example, the identifier 2 is an SP-CLI-RNTI. For example, the field 8 includes the following fields and corresponding value settings:

In an example 7, when the field 8 is used to activate the measurement report 1, for a format of the field 8, refer to Table 7.

**Table 7**

| | Control information 1 |
|---|---|
| Hybrid automatic repeat request process number | Set to all 0s |
| Redundancy version | Set to all 0s |

Specifically, values of bit fields of the hybrid automatic repeat request process number and values of bit fields of the redundancy version in the field 8 are all set to 0, to indicate, to the terminal device 130, a meaning of activating the measurement report 1.

In an example 8, when the field 8 is used to deactivate the measurement report 1, for a format of the field 8, refer to Table 8.

**Table 8**

| | Control information 1 |
|---|---|
| Hybrid automatic repeat request process number | Set to all 0s |
| Modulation and coding | Set to all 1s |
| scheme | |
| Resource block assignment | If a higher layer only configures RA as a type 0, set to all 0s; if the higher layer only configures the RA as a type 1, set to all 1s; if the higher layer configures the RA to dynamically change between the type 0 and the type 1, and an MSB value is '0, set to all 0s; otherwise, set to all 1s; or for DCI 0_1 for which the higher layer configures a type of the RA as 2, if µ=0, set to all 1s; or if µ=1, set to all 0s. |
| Redundancy version | Set to all 0s |

Specifically, the values of the bit fields of the hybrid automatic repeat request process number in the field 8 are set to all 0s, values of bit fields of the modulation and coding scheme are set to all 1s, values of bit fields of the resource block assignment are set to all 0s or all 1s based on different RA types, and the values of the bit fields of the redundancy version are set to all 0s, to indicate, to the terminal device 130, a meaning of deactivating the measurement report 1.

Specifically, when the reporting type of the measurement report 1 is the aperiodic reporting, the control information 1 includes a field 9, and the field 9 is for triggering the terminal device 130 to report the measurement report 1 to the network device 110. The field 9 may be a new field, and is different from an existing field used to trigger reporting of a CSI report. For example, the field 9 may be a CLI request indicator field. Alternatively, the field 9 may be an existing field used to trigger reporting of the CSI report, but a maximum quantity of bits of the field 9 is greater than or equal to 6.

Optionally, in a possible implementation, the method 300 may further include:
S310c: The terminal device 130 receives control information 2 from the network device 110, where the control information 2 indicates at least one of the following to M terminal devices: whether to send a measurement signal, whether to measure CLI, or whether to report a CLI measurement report.

It may be understood that the network device 110 may send the control information 2 to the M terminal devices, where the M terminal devices include the terminal device 130. The terminal device 130 performs an operation based on content indicated by the control information 2. For example, when the control information 2 indicates to perform CLI measurement, the terminal device 130 performs CLI measurement; when the control information 2 indicates to send the measurement signal, the terminal device 130 may send the measurement signal to another terminal device; when the control information 2 indicates to report the CLI measurement report, the terminal device 130 reports the CLI measurement report to the network device 110; when the control information 2 indicates to send the measurement signal and measure the CLI, the terminal device 130 sends the measurement signal and measure the CLI based on the indication of the control information 2; or when the control information 2 indicates to send the measurement signal, measure the CLI, and report the CLI measurement report, the terminal device 130 sends the measurement signal, measures the CLI, and reports the CLI measurement report based on the indication of the control information 2.

It may be further understood that the M terminal devices may all be within a coverage area of the network device 110, or may not all be within the coverage area of the network device 110. If some terminal devices are not within the coverage area of the network device 110, the network device 110 may interact with another network device, to deliver the control information 2 to a terminal device within the coverage area of the network device.

In a possible implementation, the control information 2 is downlink control information and is a terminal device-group common (UE-group common) DCI, the downlink control information is scrambled by using a terminal device-group common RNTI, and the RNTI may be configured by the network device.

In a possible implementation, the control information 2 includes N sub-blocks (blocks), and a sub-block 1 in the N sub-blocks indicates at least one of the following to an associated terminal device in the M terminal devices: whether to send a measurement signal, whether to measure CLl, or whether to report a CLI measurement report. For example, each sub-block includes two bits, a first bit is a measurement signal sending indicator field, and a second bit is a CLI measurement indicator field. In an example, an indication status is shown in Table 9.

**Table 9**

| **Bit status** | **Indicated content** |
|---|---|
| **00** | Not to send a measurement signal, and not to perform CLI measurement |
| **01** | Not to send the measurement signal, and to perform CLI measurement |
| **10** | To send the measurement signal, and not to perform CLI measurement |
| **11** | To send the measurement signal, and to perform CLI measurement |

For example, it can be learned from Table 9 that, when the bit status is 00, it may indicate not to send the measurement signal and not to perform CLI measurement; when the bit status is 01, it may indicate not to send the measurement signal and to perform CLI measurement; when the bit status is 10, it may indicate to send the measurement signal and not to perform CLI measurement; or when the bit status is 11, it may indicate to send the measurement signal and to perform CLI measurement. The foregoing content is merely used as an example for understanding, and is not used as a final limitation.

It may be understood that the CLI measurement indicator field may include only a meaning of measuring the CLI, or may further include a meaning of reporting the CLI measurement report. For example, the CLI measurement indicator field indicates the terminal device 130 to measure the CLI, but does not indicate the terminal device 130 to report the CLI measurement report; or the CLI measurement indicator field indicates the terminal device 130 to measure the CLI and report the CLI measurement report. When the CLI measurement indicator field indicates the terminal device 130 to measure the CLI but does not indicate the terminal device 130 to report the CLI measurement report, this application supports each sub-block in further including one bit (that is, three bits), where the bit indicates whether to report the CLI measurement report, and the like.

Further, after receiving the control information 2, the terminal device 130 determines, based on a sub-block associated with the terminal device 130 in the control information 2, whether to send the measurement signal and/or whether to perform CLI measurement. Further, it is determined, based on content indicated by another sub-block, whether to perform corresponding CLI measurement at a corresponding moment. If another terminal device does not send a measurement signal at the corresponding moment, the terminal device 120 does not perform corresponding CLI measurement at the moment; otherwise, the terminal device 130 performs corresponding CLI measurement at the moment.

For example, five terminal devices form a group. Measurement signal sending and CLI measurement reporting behaviors of UE 1 to UE 5 are as follows:
1. UE 1: sends the measurement signal 1 at a moment T1.
2. UE 2: sends the measurement signal 2 at a moment T2, and measures the measurement signal 1 at the moment T1.
3. UE 3: sends the measurement signal 3 at a moment T3, measures the measurement signal 1 at the moment T1, and measures the measurement signal 2 at the moment T2.
4. UE 4: sends a measurement signal 4 at a moment T4, measures the measurement signal 1 at the moment T1, measures the measurement signal 2 at the moment T2, and measures the measurement signal 3 at the moment T3.
5. UE 5: does not send a measurement signal 5, measures the measurement signal 1 at the moment T1, measures the measurement signal 2 at the moment T2, measures the measurement signal 3 at the moment T3, and measures the measurement signal 4 at a moment T4.

It may be understood that the network device 110 sends, to the UE 1 to the UE 5 by using RRC signaling, measurement signal sending patterns (or referred to as configuration information of the measurement signals) and CLI measurement patterns (or referred to as CLI measurement configuration information) of the UE 1 to the UE 5, and configures five sub-blocks in the corresponding control information 2, to separately indicate each UE whether to send the measurement signal and/or perform CLI measurement reporting. The network device 110 dynamically and separately indicates, by using the control information 2, the UE 1 to the UE 5 whether to send the measurement signal and/or perform CLI measurement reporting. In other words, information about the moments at which the UE 1 to the UE 5 send the measurement signals may be configured by the network device 110 by using the RRC signaling, instead of being indicated by using the control information 2. That is, the network device 110 only indicates, by using the control information 2, content such as whether to send the measurement signal, but does not further indicate information such as the moment at which the measurement signal is sent.

In conclusion, when the terminal device 130 determines, based on the control information 2, that the another terminal device sends the measurement signal, the terminal device 130 may determine, based on a measurement signal sending pattern of the another terminal device that is configured by the network device 110, the moment at which the another terminal device sends the measurement signal, to complete CLI measurement.

For example, if the control information 2 indicates the UE 5 and the UE 2 not to send the measurement signals but to perform CLI measurement, and indicates the UE 1, the UE 3, and the UE 4 to send the measurement signals and perform CLI measurement, behaviors of the UE 1 to the UE 5 are as follows:
1. UE 1: sends the measurement signal 1 at the moment T1.
2. UE 2: does not send the measurement signal 2, and measures the measurement signal 1 at the moment T1.
3. UE 3: sends the measurement signal 3 at the moment T3, and measures the measurement signal 1 at the moment T1.
4. UE 4: sends the measurement signal 4 at the moment T4, measures the measurement signal 1 at the moment T1, and measures the measurement signal 3 at the moment T3.
5. UE 5: does not send the measurement signal 5, measures the measurement signal 1 at the moment T1, measures the measurement signal 3 at the moment T3, and measures the measurement signal 4 at the moment T4.

The control information 2 indicates at least one of the following to a plurality of terminal devices: measurement signal sending, CLI measurement, and reporting of the CLI measurement report. This helps reduce signaling overheads, and more flexibly schedule measurement signal sending, CLI measurement, and reporting of CLI measurement reports of the plurality of terminal devices, and helps reduce resource overheads of the measurement signal, reduce unnecessary CLI measurement reporting, and improve system efficiency.

It should be noted that a sequence of performing S310a to S310c is not limited in this application.

The following further describes the method 300 with reference to another accompanying drawing.

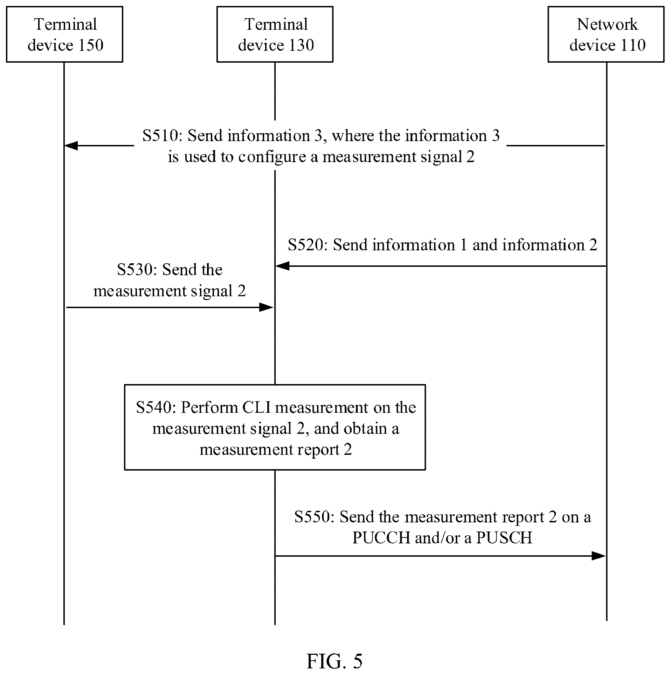

FIG. 5 is a diagram of an interaction procedure of a measurement method 500 according to an embodiment of this application. The method procedure in FIG. 5 may be performed by a terminal device 130, a terminal device 150, and a network device 110, or may be performed by modules and/or components (for example, chips or integrated circuits) that have corresponding functions and that are installed in the terminal device 130, the terminal device 150, and the network device 110. This is not limited in this application. The following uses the terminal device 130, the terminal device 150, and the network device 110 as an example for description. As shown in FIG. 5, the method 500 includes the following steps.

S510: The network device 110 sends information 3 to the terminal device 150, where the information 3 is used to configure sending of a measurement signal 2.

Correspondingly, the terminal device 150 receives the information 3 from the network device 110, and determines, based on the information 3, a configuration parameter used for sending the measurement signal 2.

It may be understood that the terminal device 150 and the terminal device 130 may be located within a coverage area of the network device 110.

For example, the information 3 may include configuration information of the measurement signal 2, and the configuration information includes content such as time domain resource information, frequency domain resource information, code domain information, and power information.

S520: The network device 110 sends information 1 and information 2 to the terminal device 130.

Correspondingly, the terminal device 130 receives the information 1 and the information 2 from the network device 110. For a description of S520, refer to the foregoing description of S310a. Details are not described herein again.

S530: The terminal device 150 sends the measurement signal 2 to the terminal device 130.

Correspondingly, the terminal device 130 receives the measurement signal 2 from the terminal device 150.

S540: The terminal device 130 measures a measurement signal 1, and obtains a measurement report 2.

S550: The terminal device 130 sends the measurement report 2 to the network device 110 on a PUCCH and/or a PUSCH.

Correspondingly, the network device 110 receives the measurement report 2 from the terminal device 130 on the PUCCH and/or the PUSCH. For a specific description of S550, refer to the description of S320. Details are not described herein again.

According to the foregoing technical solution, in this application, the terminal device 130 can report the measurement report to the network device 110 more flexibly and more quickly, and the network device 110 can obtain variation of CLI between the terminal device 130 and another terminal device more quickly.

The foregoing describes the method embodiments in embodiments of this application, and the following describes corresponding apparatus embodiments.

To implement functions in the methods provided in this application, both a terminal and a network device may include a hardware structure and/or a software module, and implement functions in a form of hardware structure, software module, or combination of the hardware structure and the software module. Whether a function in the foregoing functions is performed by using the hardware structure, the software module, or the combination of the hardware structure and the software module depends on particular applications and design constraints of the technical solutions.

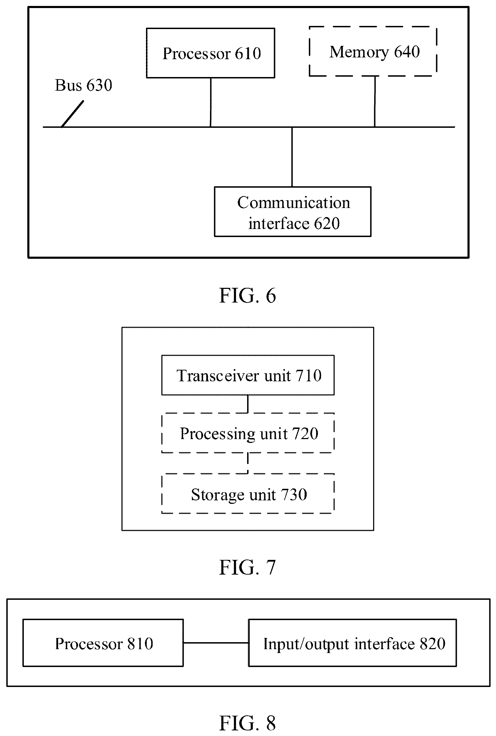

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. The communication apparatus 600 shown in FIG. 6 may be the network device 110, or may be the terminal device 130.

Optionally, the communication apparatus 600 further includes a memory 640.

The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more central processing units (central processing units, CPU). When the processor 610 is one CPU, the CPU may be a single-core CPU, or may be a multi-core CPU.

When the communication apparatus 600 is the terminal device 130, the processor 610 is, for example, configured to perform the following operation: receiving at least one measurement signal. The processor 610 is further configured to perform the following operation: reporting at least one measurement report to the network device 110 on a PUCCH.

The foregoing content is merely used as an example for description. When the communication apparatus 600 is the terminal device 130, the communication apparatus 600 is responsible for performing the methods or steps related to the terminal device 130 in the foregoing method embodiments.

When the communication apparatus 600 is the network device 110, the processor 610 is, for example, configured to perform the following operation: receiving at least one measurement report from the terminal device 130 on a PUCCH.

The foregoing content is merely used as an example for description. When the communication apparatus 600 is the network device 110, the communication apparatus 600 is responsible for performing the methods or steps related to the network device 110 in the foregoing method embodiments.

The foregoing descriptions are merely an example for description. For specific content, refer to the content shown in the foregoing method embodiments. In addition, for implementation of each operation in FIG. 6, refer to corresponding descriptions in the method embodiments shown in FIG. 3 to FIG. 5.

FIG. 7 is a block diagram of a communication apparatus 700 according to an embodiment of this application. The communication apparatus 700 may be the network device 110 or the terminal device 130 in the foregoing embodiments, or may be a chip or a module in the network device 110 or the terminal device 130, and is configured to implement the methods in the foregoing embodiments. The communication apparatus 700 includes a transceiver unit 710. The following describes the transceiver unit 710 by using an example.

The transceiver unit 710 may include a sending unit and a receiving unit that are respectively configured to implement a sending function or a receiving function in the foregoing method embodiments; and may further include a processing unit configured to implement a function other than the sending function or the receiving function.

When the communication apparatus 700 is the terminal device 130, the transceiver unit 710 is, for example, configured to receive at least one measurement signal. The transceiver unit 710 is further configured to report at least one measurement report and the like to the network device 110 on a PUCCH.

Optionally, the communication apparatus 700 further includes a processing unit 720 configured to perform content related to steps of processing, coordination, and the like of the terminal device 130. For example, the processing unit 720 is configured to perform CLI measurement on the measurement signal and obtain the measurement report.

Optionally, the communication apparatus 700 further includes a storage unit 730, and the storage unit 730 is configured to store a program or code used to perform the foregoing methods.

The foregoing content is merely used as an example for description. When the communication apparatus 700 is the terminal device 130, the communication apparatus 700 is responsible for performing the methods or steps related to the terminal device 130 in the foregoing method embodiments.

When the communication apparatus 700 is the network device 110, the transceiver unit 710 is, for example, configured to receive at least one measurement report from the terminal device 130 on a PUCCH.

Optionally, the communication apparatus 700 may further include a processing unit 720 configured to perform content related to steps of processing, coordination, and the like of the network device 110. For example, the processing unit 720 is configured to determine variation of CLI and the like between terminal devices based on the measurement report.

Optionally, the communication apparatus 700 further includes a storage unit 730, and the storage unit 730 is configured to store a program or code used to perform the foregoing methods.

The foregoing content is merely used as an example for description. When the communication apparatus 700 is the network device 110, the communication apparatus 700 is responsible for performing the methods or steps related to the network device 110 in the foregoing method embodiments.

In addition, for implementation of each operation in FIG. 7, refer to corresponding descriptions of the methods shown in the foregoing embodiments. Details are not described herein again.

The apparatus embodiments shown in FIG. 6 and FIG. 7 are used to implement the content described in FIG. 3 to FIG. 5 in the foregoing method embodiments. Therefore, for specific execution steps and methods of the apparatuses shown in FIG. 6 and FIG. 7, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. This is described herein once for all, and details are not described below again.

FIG. 8 is a block diagram of a communication apparatus 800 according to an embodiment of this application. The communication apparatus 800 may be configured to implement functions of the network device 110 and the terminal device 130 in the foregoing methods. The communication apparatus 800 may be a chip in the network device 110 or the terminal device 130.

The communication apparatus 800 includes an input/output interface 820 and a processor 810. The input/output interface 820 may be an input/output circuit. The processor 810 may be a signal processor, a chip, or another integrated circuit that may implement the methods in this application. The input/output interface 820 is configured to input or output a signal or data.

For example, when the communication apparatus 800 is the terminal device 130, the input/output interface 820 is configured to receive at least one measurement signal. The input/output interface 820 is further configured to report at least one measurement report to the network device 110 on a PUCCH. The processor 810 is configured to perform CLI measurement on the measurement signal and obtain the measurement report. The processor 810 is further configured to perform some or all steps of any method provided in this application.

For example, when the communication apparatus 800 is the network device 110, the input/output interface 820 is configured to receive at least one measurement report from the terminal device 130 on a PUCCH. The processor 810 is configured to perform some or all steps of any method provided in this application.

In a possible implementation, the processor 810 executes instructions stored in a memory, to implement the functions implemented by the network device or the terminal device.

Optionally, the communication apparatus 800 further includes the memory.

Optionally, the processor is integrated with the memory.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that may implement the methods in embodiments of this application.

The foregoing description of the apparatus in FIG. 8 is merely an example for description. The apparatus can be configured to perform the methods in the foregoing embodiments. For specific content, refer to the descriptions in the foregoing method embodiments. Details are not described herein again.

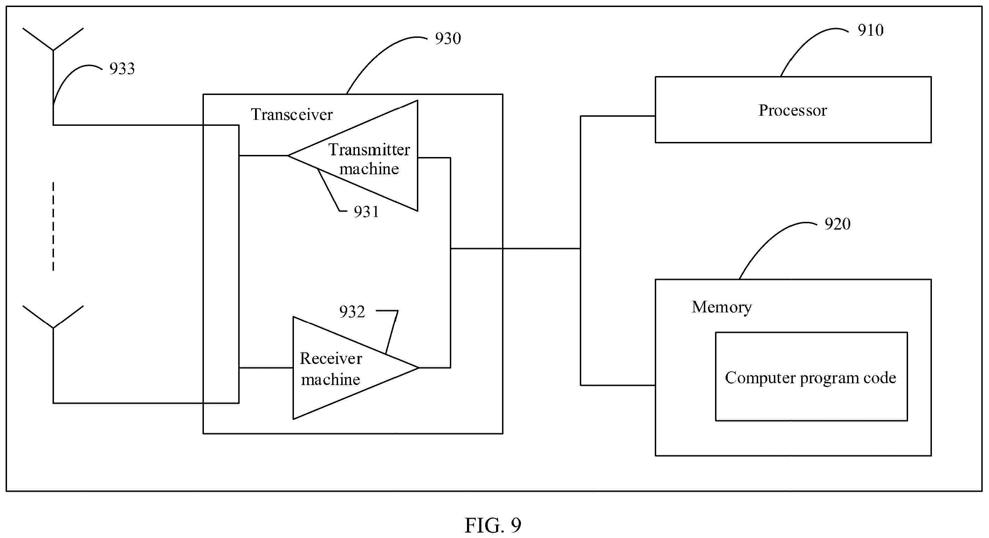

FIG. 9 is a block diagram of a communication apparatus 900 according to an embodiment of this application. The communication apparatus 900 may be the network device 110 or a chip. The communication apparatus 900 may be configured to perform operations performed by the network device 110 in the method embodiments shown in FIG. 3 and FIG. 5.

When the communication apparatus 900 is the network device 110, for example, a base station, FIG. 9 is a diagram of a simplified structure of the base station. The base station includes a part 910, a part 920, and a part 930. The part 910 is mainly configured to: perform baseband processing, control the base station, and the like. The part 910 is usually a control center of the base station, may be usually referred to as a processor, and is configured to control the base station to perform a processing operation on a network device side in the foregoing method embodiments. The part 920 is mainly configured to store computer program code and data. The part 930 is mainly configured to: receive and send a radio frequency signal, and perform conversion between the radio frequency signal and a baseband signal. The part 930 may be usually referred to as a transceiver module, a transceiver machine, a transceiver circuit, a transceiver, or the like. The transceiver module in the part 930 may also be referred to as a transceiver machine, a transceiver, or the like, and includes an antenna 933 and a radio frequency circuit (not shown in FIG. 9). The radio frequency circuit is mainly configured to perform radio frequency processing. Optionally, a component that is in the part 930 and that is configured to implement a receiving function may be considered as a receiver machine, and a component that is in the part 930 and that is configured to implement a sending function may be considered as a transmitter machine. In other words, the part 930 includes a receiver machine 932 and a transmitter machine 931. The receiver machine may also be referred to as a receiving module, a receiver, a receiver circuit, or the like, and the transmitter machine may be referred to as a transmitting module, a transmitter, a transmitter circuit, or the like.

The part 910 and the part 920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 930 is configured to perform receiving and sending-related processes performed by the network device in the embodiments shown in FIG. 3 to FIG. 5. The processor in the part 910 is configured to perform a processing-related process performed by the network device in the embodiments shown in FIG. 3 to FIG. 5.

In another implementation, the processor in the part 910 is configured to perform a processing-related process performed by a communication device in the embodiments shown in FIG. 3 to FIG. 5.

In another implementation, the transceiver module in the part 930 is configured to perform receiving and sending-related processes performed by the communication device in the embodiments shown in FIG. 3 to FIG. 5.

It should be understood that FIG. 9 is merely an example rather than a limitation, and the foregoing network device including the processor, the memory, and the transceiver may not depend on the structures shown in FIG. 6 to FIG. 8.

When the communication apparatus 900 is a chip, the chip includes a transceiver, a memory, and a processor. The transceiver may be an input/output circuit or a communication interface. The processor is a processor, a microprocessor, or an integrated circuit integrated on the chip. The sending operation performed by the network device in the foregoing method embodiments may be understood as output of the chip, and the receiving operation performed by the network device in the foregoing method embodiments may be understood as input of the chip.

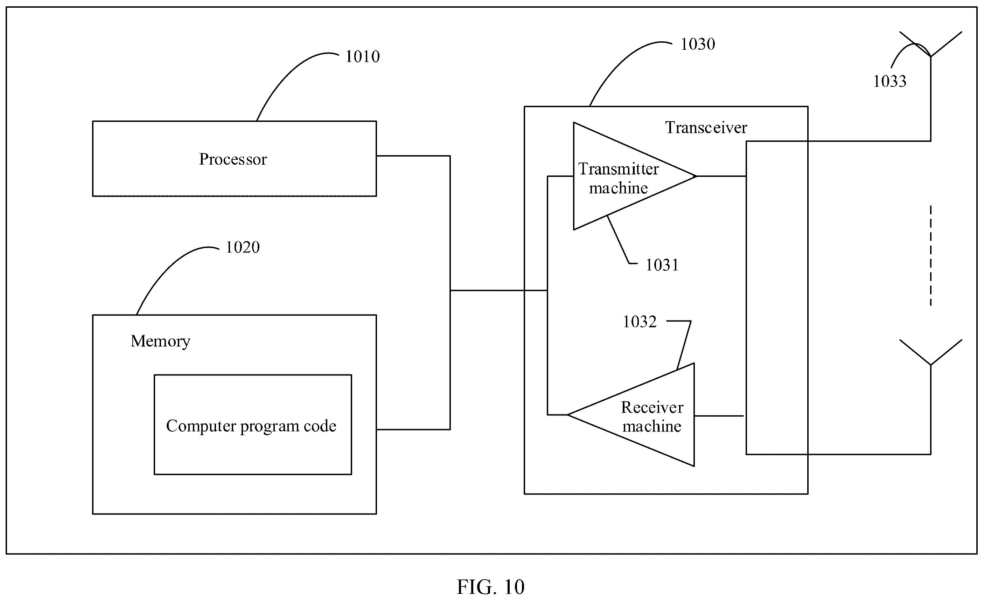

FIG. 10 is a block diagram of a communication apparatus 1000 according to an embodiment of this application. The communication apparatus 1000 may be a processor or a chip of the terminal device 130. The communication apparatus 1000 may be configured to perform operations performed by the terminal device 130 or a communication device in the foregoing method embodiments.

When the communication apparatus 1000 is the terminal device 130, FIG. 10 is a diagram of a simplified structure of the terminal device. As shown in FIG. 10, the terminal device includes a processor, a memory, and a transceiver. The memory may store computer program code. The transceiver includes a transmitter machine 1031, a receiver machine 1032, a radio frequency circuit (not shown in FIG. 10), an antenna 1033, and an input/output apparatus (not shown in FIG. 10).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 10 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 10, the terminal device includes the processor 1010, the memory 1020, and the transceiver 1030. The processor 1010 may also be referred to as a processing unit, a processing board, a processing module, a processing apparatus, or the like. The transceiver 1030 may also be referred to as a transceiver unit, a transceiver machine, a transceiver apparatus, or the like.

Optionally, a component that is in the transceiver 1030 and that is configured to implement a receiving function may be considered as a receiving module, and a component that is in the transceiver 1030 and that is configured to implement a sending function may be considered as a sending module. That is, the transceiver 1030 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1010 is configured to perform a processing action on a terminal device side in the embodiments shown in FIG. 3 to FIG. 5, and the transceiver 1030 is configured to perform receiving and sending actions on the terminal device side in FIG. 3 to FIG. 5.

For example, in an implementation, the processor 1010 is configured to perform a processing action on the terminal device side in the embodiments shown in FIG. 3 to FIG. 5, and the transceiver 1030 is configured to perform receiving and sending actions on the terminal device side in FIG. 3 to FIG. 5.

It should be understood that FIG. 10 is merely an example rather than a limitation. The foregoing terminal device including the transceiver module and the processing module may not depend on the structures shown in FIG. 6 to FIG. 8.

When the communication apparatus 1000 is a chip, the chip includes a processor, a memory, and a transceiver. The transceiver may be an input/output circuit or a communication interface. The processor may be a processing module, a microprocessor, or an integrated circuit integrated on the chip. The sending operation performed by the terminal device in the foregoing method embodiments may be understood as output of the chip, and the receiving operation performed by the terminal device in the foregoing method embodiments may be understood as input of the chip.

This application further provides a chip, including a processor configured to invoke, from a memory, instructions stored in the memory, and run the instructions, for a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes the memory. The memory is configured to store a computer program or the code.

This application further provides a processor configured to be coupled to a memory and configured to perform a method and a function that are related to the network device or the terminal device in any one of the foregoing embodiments.

Another embodiment of this application provides a computer program product including instructions. When the computer program product is run on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In descriptions in embodiments of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, the term such as "example" or "for example" in embodiments of this application represents giving an example, an illustration, or a description.

Any embodiment or design scheme described as an "example" or "for example" in embodiments of this application shall not be explained as being more preferred or having more advantages than another embodiment or design scheme. Exactly, use of the terms such as "example" or "for example" is intended to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When functions are implemented in a form of software functional unit and sold or used as an independent product, the functions may be stored in a computer-readable storage medium. Based on such an understanding, the technical solutions of embodiments of this application essentially, or the part contributing to a conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope of embodiments of this application shall be subject to the protection scope of the claims.

## Claims

1. A measurement method, comprising:
receiving, by a first terminal device, one or more measurement signals, wherein the one or more measurement signals comprise a first measurement signal; and
sending, by the first terminal device, one or more measurement reports to a network device on at least one of a physical uplink control channel and a physical uplink shared channel, wherein the one or more measurement reports comprise a first measurement report, and the first measurement report comprises information obtained by performing cross-link interference CLI measurement based on the first measurement signal; and
a reporting type of the first measurement report comprises aperiodic reporting or semi-persistent reporting.

2. The method according to claim 1, wherein the method further comprises:
receiving, by the first terminal device, first control information from the network device, wherein the first control information is for triggering the first terminal device to report the first measurement report to the network device.

3. The method according to claim 2, wherein the reporting type is the semi-persistent reporting, the first control information is scrambled by using a first identifier, and the first control information comprises a first field and a second field; and
the first field indicates to report the first measurement report, the second field is a special domain field that is for activating or deactivating the first measurement report and that is effective on a physical downlink control channel, and a maximum quantity of bits of the first field is greater than or equal to 6.

4. The method according to claim 2, wherein the reporting type is the semi-persistent reporting, the first control information is scrambled by using a first identifier, and the first control information comprises a first field and a second field; and
the first field indicates to report the first measurement report, and the second field is a special domain field that is for activating or deactivating the first measurement report and that is effective on a physical downlink control channel, wherein
the first field is different from a third field, the third field is a channel state information indicator field in downlink control information, and the downlink control information is used to activate or deactivate semi-persistent channel state information reporting.

5. The method according to claim 2, wherein the reporting type is the semi-persistent reporting, the first control information is scrambled by using a first identifier, and the first control information comprises a first field and a second field; and
the first field indicates to report the first measurement report, and the second field is a special domain field that is for activating or deactivating the first measurement report and that is effective on a physical downlink control channel, wherein
the second field is different from a fourth field, and the fourth field is a special domain field that is in downlink control information and that is used to activate or deactivate semi-persistent channel state information reporting.

6. The method according to claim 2, wherein the reporting type is the semi-persistent reporting, and the first control information is scrambled by using a first identifier; and
the first identifier is different from a second identifier, and the second identifier is an identifier used to scramble downlink control information for activating or deactivating semi-persistent channel state information reporting.

7. The method according to claim 2, wherein the reporting type is the aperiodic reporting, the first control information comprises a first field, and the first field indicates to report the first measurement report; and
the first field is the same as a second field, and a maximum quantity of bits of the first field is greater than or equal to 6, or the first field is different from the second field, wherein
the second field indicates to report a channel state information report.

8. The method according to any one of claims 1 to 7, wherein the method further comprises:
receiving, by the first terminal device, second control information from the network device, wherein the second control information indicates at least one of the following to M terminal devices:
whether to send a measurement signal, whether to measure CLI, or whether to report a CLI measurement report, wherein
the M terminal devices comprise the first terminal device.

9. The method according to claim 8, wherein the second control information comprises N sub-blocks, and a first sub-block in the N sub-blocks indicates at least one of the following to an associated terminal device in the M terminal devices:
whether to send a measurement signal, whether to measure CLI, or whether to report a CLI measurement report.

10. The method according to any one of claims 1 to 9, wherein the method further comprises:
receiving, by the first terminal device, at least one of first information and second information from the network device, wherein
the first information comprises at least one piece of measurement resource configuration information, the at least one piece of measurement resource configuration information comprises first measurement resource configuration information, and the first measurement resource configuration information is used to configure a first communication resource to be used by the first terminal device to receive the first measurement signal; and
the second information comprises at least one piece of measurement reporting configuration information, the at least one piece of measurement reporting configuration information comprises first measurement reporting configuration information, and the first measurement reporting configuration information is used to configure reporting of the first measurement report.

11. A measurement method, comprising:
receiving, by a network device, one or more measurement reports from a first terminal device on at least one of a physical uplink control channel and a physical uplink shared channel, wherein the one or more measurement reports comprise a first measurement report, and the first measurement report comprises information obtained by performing cross-link interference CLI measurement based on a first measurement signal; and
a reporting type of the first measurement report comprises aperiodic reporting or semi-persistent reporting.

12. The method according to claim 11, wherein the method further comprises:
sending, by the network device, first control information to the first terminal device, wherein the first control information is for triggering the first terminal device to report the first measurement report to the network device.

13. The method according to claim 12, wherein the reporting type is the semi-persistent reporting, the first control information is scrambled by using a first identifier, and the first control information comprises a first field and a second field; and
the first field indicates to report the first measurement report, the second field is a special domain field that is for activating or deactivating the first measurement report and that is effective on a physical downlink control channel, and a maximum quantity of bits of the first field is greater than or equal to 6.

14. The method according to claim 12, wherein the reporting type is the semi-persistent reporting, the first control information is scrambled by using a first identifier, and the first control information comprises a first field and a second field; and
the first field indicates to report the first measurement report, and the second field is a special domain field that is for activating or deactivating the first measurement report and that is effective on a physical downlink control channel, wherein
the first field is different from a third field, the third field is a channel state information indicator field in downlink control information, and the downlink control information is used to activate or deactivate semi-persistent channel state information reporting.

15. The method according to claim 12, wherein the reporting type is the semi-persistent reporting, the first control information is scrambled by using a first identifier, and the first control information comprises a first field and a second field; and
the first field indicates to report the first measurement report, and the second field is a special domain field that is for activating or deactivating the first measurement report and that is effective on a physical downlink control channel, wherein
the second field is different from a fourth field, and the fourth field is a special domain field that is in downlink control information and that is used to activate or deactivate semi-persistent channel state information reporting.

16. The method according to claim 12, wherein the reporting type is the semi-persistent reporting, and the first control information is scrambled by using a first identifier; and
the first identifier is different from a second identifier, and the second identifier is an identifier used to scramble downlink control information for activating or deactivating semi-persistent channel state information reporting.

17. The method according to claim 12, wherein the reporting type is the aperiodic reporting, the first control information comprises a first field, and the first field indicates to report the first measurement report; and
the first field is the same as a second field, and a maximum quantity of bits of the first field is greater than or equal to 6, or the first field is different from the second field, wherein
the second field indicates to report a channel state information report.

18. The method according to any one of claims 11 to 17, wherein the method further comprises:
sending, by the network device, second control information to the first terminal device, wherein the second control information indicates at least one of the following to M terminal devices:
whether to send a measurement signal, whether to measure CLI, or whether to report a CLI measurement report, wherein
the M terminal devices comprise the first terminal device.

19. The method according to claim 18, wherein the second control information comprises N sub-blocks, and a first sub-block in the N sub-blocks indicates at least one of the following to an associated terminal device in the M terminal devices:
whether to send a measurement signal, whether to measure CLI, or whether to report a CLI measurement report.

20. The method according to any one of claims 11 to 19, wherein the method further comprises:
sending, by the network device, at least one of first information and second information to the first terminal device, wherein
the first information comprises at least one piece of measurement resource configuration information, the at least one piece of measurement resource configuration information comprises first measurement resource configuration information, and the first measurement resource configuration information is used to configure a first communication resource to be used by the first terminal device to receive the first measurement signal; and
the second information comprises at least one piece of measurement reporting configuration information, the at least one piece of measurement reporting configuration information comprises first measurement reporting configuration information, and the first measurement reporting configuration information is used to configure reporting of the first measurement report.

21. A communication apparatus, comprising a processor, wherein the processor is configured to: by executing a computer program or instructions or through a logic circuit,
enable the communication apparatus to perform the method according to any one of claims 1 to 10, or
enable the communication apparatus to perform the method according to any one of claims 11 to 20.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein the input/output interface is configured to input and/or output a signal; and
the logic circuit is configured to perform the method according to any one of claims 1 to 10, or
the logic circuit is configured to perform the method according to any one of claims 11 to 20.

25. A computer-readable storage medium, wherein the computer-readable storage medium stores a computer program or instructions, and when the computer program or the instructions are run on a computer,
the method according to any one of claims 1 to 10 is performed; or
the method according to any one of claims 11 to 20 is performed.

26. A computer program product, comprising instructions, wherein when the instructions are run on a computer,
the method according to any one of claims 1 to 10 is performed; or
the method according to any one of claims 11 to 20 is performed.

27. A communication system, comprising a first terminal device and a network device, wherein
the first terminal device is configured to perform the method according to any one of claims 1 to 10; and
the network device is configured to perform the method according to any one of claims 11 to 20.
